# EUROPEAN PATENT APPLICATION

(11) **EP 1 332 927 A2**
(43) Date of publication of application: **06.08.2003**
(21) Application number: 03002036.6
(22) Date of filing: 28.01.2003
(51) Int. Cl.: B60R 16/02, B60R 1/08

(54) **Vehicular wireless transmission control assembly**

(30) Priority: 30.01.2002 CN 02103109
(71) Applicant: Exon Science Inc., Guei Shan Shiang, Taoyuan,Taiwan 333 (TW)
(72) Inventor: Su, Wen-Wei, No. 5, Wen Hua Lane, Taoyuan, Taiwan 333 (TW); Chen Kuei-Hung, No. 5, Wen Hua Lane, Taoyuan, Taiwan 333 (TW); Hsiao, Shun-Hsiang, No. 5, Wen Hua Lane, Taoyuan, Taiwan 333 (TW)
(74) Representative: Winkler, Andreas, Dr.

(57) **Abstract**

A wireless transmission control assembly for use with a vehicular monitoring device and a vehicular status indicator is disclosed. The assembly includes a sensing device (12) in communication with the vehicular status indicator, asserting a control signal (101) in response to an enabled operation of the vehicular status indicator (10); a wireless signal transmitter (13) in communication with the sensing device (12), transforming the control signal into a wireless transmission control signal, and outputting the wireless transmission control signal; a wireless signal receiver (14) receiving and recovering the wireless transmission control signal into the control signal; and a control device (15) in communication with the wireless signal receiver (14) and the vehicular monitoring device, whereby the vehicular monitoring device performs a view-range adjusting operation in response to the control signal.

## Description

The present invention relates to a wireless transmission control assembly, and more particular to a wireless transmission control assembly for adjusting a view range of a vehicular monitoring device according to a vehicular status indicator.

For modem vehicles, to move has not been the only purpose any longer. People need faster, safer and more comfortable cars other than just vehicles. Therefore, various kinds of electronic apparatus are applied to the modern cars to conveniently lock/unlock the doors, operate the rearview mirrors, move the seats, switch on/off the headlamps, and etc. In addition, equipments such as defog heaters, air bags, stereo sound and speakers are becoming essential for general cars. For deluxe cars, advanced electronic apparatus are further equipped to comply with the user's requirements.

For example, when a driver is seated in a vehicle, he should adjust all of the interior and exterior rearview mirrors according to his need. The rearview mirror can be adjusted manually or automatically by pushing buttons. After the adjustment of rearview mirrors is done, the view angle of each rearview mirror seen by the driver is constant, and it is difficult and also dangerous for the driver to further change the view angles while driving.

In order to solve this problem, some deluxe cars are equipped with a view-angle adjustable rearview mirror. The view angle of the rearview mirror can be automatically adjusted in order to avoid any blind spot. For example, when the vehicle is turning right, it is desirable that the driver clearly sees the right lane by rotating the exterior rearview mirror at the right side of the vehicle outwards.

Unfortunately, only a few deluxe cars possess this privilege. For most cars, the only way to possess the automatic view-angle adjusting function is to apply an additional control assembly to the standard specifications of the car.

### SUMMARY OF THE INVENTION

Therefore, an object of the present invention is to provide a control assembly, which can be easily incorporated into the layout of a car to automatically adjust the view angle of the rearview mirror.

A first aspect of the present invention relates to a wireless transmission control assembly for used with a vehicular monitoring device and a vehicular status indicator. The assembly comprises a sensing device in communication with the vehicular status indicator, asserting a control signal in response to an enabled operation of the vehicular status indicator; a wireless signal transmitter in communication with the sensing device, transforming the control signal into a wireless transmission control signal, and outputting the wireless transmission control signal; a wireless signal receiver receiving and recovering the wireless transmission control signal into the control signal; and a control device in communication with the wireless signal receiver and the vehicular monitoring device, having the vehicular monitoring device perform a view-range adjusting operation in response to the control signal.

Preferably, the sensing device and the wireless signal transmitter are disposed adjacent to the vehicular status indicator. For example, when the vehicular status indicator is a turning-direction indicator light, the sensing device and the wireless signal transmitter are preferably disposed in the trunk of a vehicle.

The vehicular status indicator can also be selected from a group consisting of an indicator-light switch, an electronic compass, a global positioning system (GPS), a telematics system, an attitude indicator, a vehicle stability control system, and a yaw sensor.

Preferably, the wireless signal receiver and the control device are disposed adjacent to the vehicular monitoring device.

For example, the vehicular monitoring device may include a rearview mirror, a camera, and/or a display.

In an embodiment, the view-range adjusting operation of the vehicular monitoring device is a rotating operation. Preferably, the vehicular monitoring device is rotated from an initial position toward a working position in response to the assertion of the control signal, and rotated back to the initial position in response to the suspension of the control signal.

Preferably, the view-range adjusting operation of the vehicular monitoring device is disabled when two different control signals are received by the control device at the same time.

In another embodiment, the view-range adjusting operation of the vehicular monitoring device is a zooming operation.

Preferably, the wireless signal transmitter is in communication with the sensing device via a vehicular digital bus, and the control device is in communication with the wireless signal receiver via the vehicular digital bus. The vehicular digital bus, for example, is a controller area network (CAN) bus or a vehicle area network (VAN) bus.

Preferably, the view-range adjusting operation of the vehicular monitoring device is performed at a rate correlating to a driving speed of the vehicle.

The present invention may best be understood through the following description with reference to the accompanying drawings, in which:
Fig. 1 is a schematic circuit block diagram showing a simplified layout of a vehicle associated with automatic view-range adjustment according to a preferred embodiment of the present invention;
Fig. 2 is a schematic diagram exemplifying the arrangement of the layout of Fig. 1 in a vehicle; and
Fig. 3 is a schematic circuit block diagram showing a simplified layout of a vehicle associated with automatic view-range adjustment according to another preferred embodiment of the present invention.

The present invention will now be described more specifically with reference to the following embodiments. It is to be noted that the following descriptions of preferred embodiments of this invention are presented herein for purpose of illustration and description only; it is not intended to be exhaustive or to be limited to the precise form disclosed.

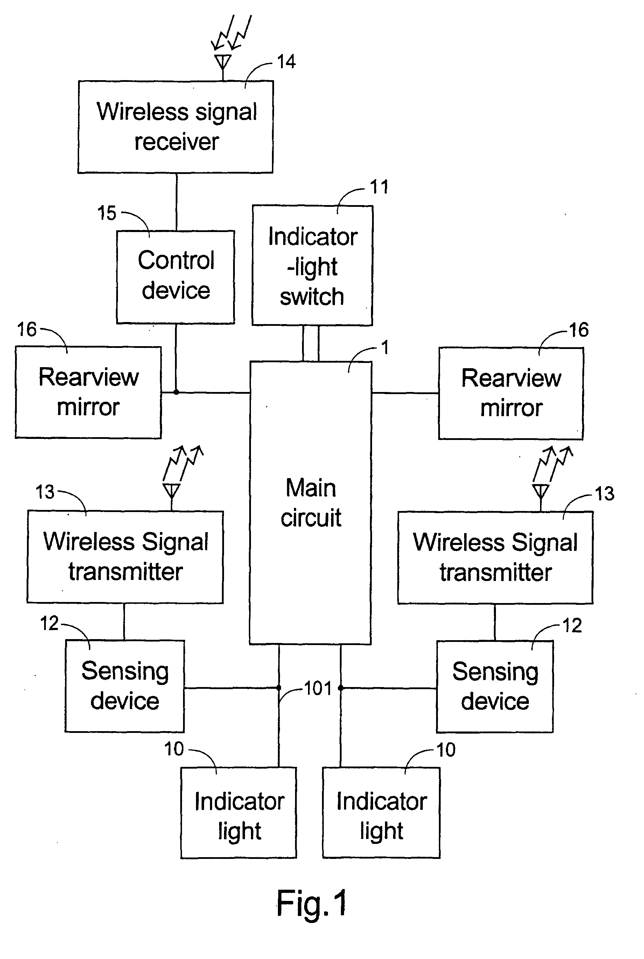

Referring to Fig. 1, a simplified layout associated with automatic view-range adjustment is shown. In this embodiment, the view-range adjustment is implemented for exterior rearview mirrors. The wireless transmission control assembly according to a preferred embodiment of the present invention includes two sensing devices 12, two wireless signal transmitters 13, a wireless signal receiver 14 and a control device 15. The two sensing devices 12 are disposed adjacent to the rear left- and right-turn indicator lights 10, respectively, and connected between the main circuit 1 of the vehicle and the indicator lights 10. The two wireless signal transmitters 13 are connected to the two sensing devices, respectively, and thus preferably also disposed near the indicator lights 10. For example, the sensing devices 12 and wireless signal transmitters 13 can be placed in the trunk of the vehicle. The wireless signal receiver 14 and the control device 15 are disposed adjacent to one of the rearview mirrors 16, e.g. the rearview mirror at the driver's side.

When the driver intends to turn the vehicle right, for example, he should manipulate the indicator light switch 11 to have the main circuit 1 supplies power to the indicator light 10 at the right side via the cable 101. Meanwhile, the sensing device 12 at the right side will also detect the enabled operation of the indicator light 10 so as to assert a control signal. The wireless signal transmitter 13, once receiving the control signal, transforms the control signal into a wireless transmittable form, e.g. a radio frequency (RF) signal or a microwave signal, and outputs the control signal indicative of the turning operation of the vehicle. The wireless transmitted control signal is received by the wireless signal receiver 14, and demodulated into the control signal to be read by the control device 15. In response to the control signal, the control device 15 turns the rearview mirror 16 at the right side outwards, i.e. counterclockwise, to enlarge the view range at the right side. Alternatively, both of the rearview mirrors 16 can be turned counterclockwise to have even larger view range at the right side.

The rearview mirror is rotated from an initial position toward a working position in response to the assertion of the control signal, as mentioned above, and kept at the working position until the control signal is suspended. After the turning operation of the vehicle has completed, the indicator-light switch 11 should be automatically or manually switched off so as to turn off the indicator light 10 at the right side. At this moment, the assertion of the control signal stops, and thus the control device 15 has the rearview mirror(s) 16 rotated back to the initial position. In order to avoid improper action, when two control signals respectively asserted by two different sensing devices 12 are received by the control device 15 at the same time, for example when the emergency flasher switch (not shown) of the vehicle is switched on to enable the twinkle of both indicator lights 10, the view-range adjusting operation for the rearview mirror(s) is disabled. In other words, the rearview mirrors are maintained at the initial position.

The similar operation can be performed for the case when the driver would like to turn the vehicle left. The left-side rearview mirror 16 or both the rearview mirrors 16 are rotated clockwise to enlarge the view range at the left side in response to the control signal asserted by the left-side sensing device 12 when the left-turn indicator light 10 is turned on.

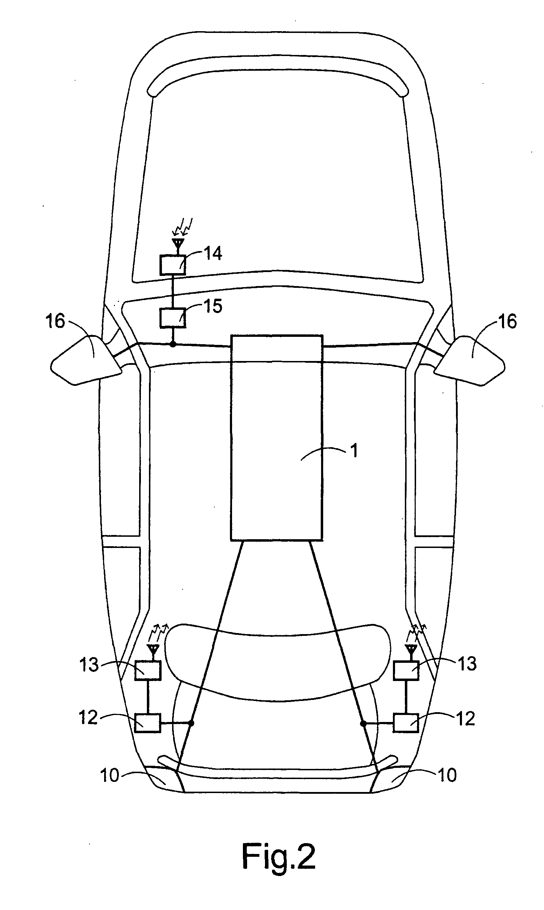

By way of wireless transmission, the control assembly for automatically adjusting the view range of the rearview mirror while the vehicle is turning can be easily attached to the layout of the vehicle. For example, referring to Fig. 2, the sensing devices and the wireless signal transmitters can be mounted in the trunk, and the wireless receiver and the control device can be mounted near the console. Therefore, the control assembly of the invention can be mounted without moving the furniture and altering the main circuit of the vehicle.

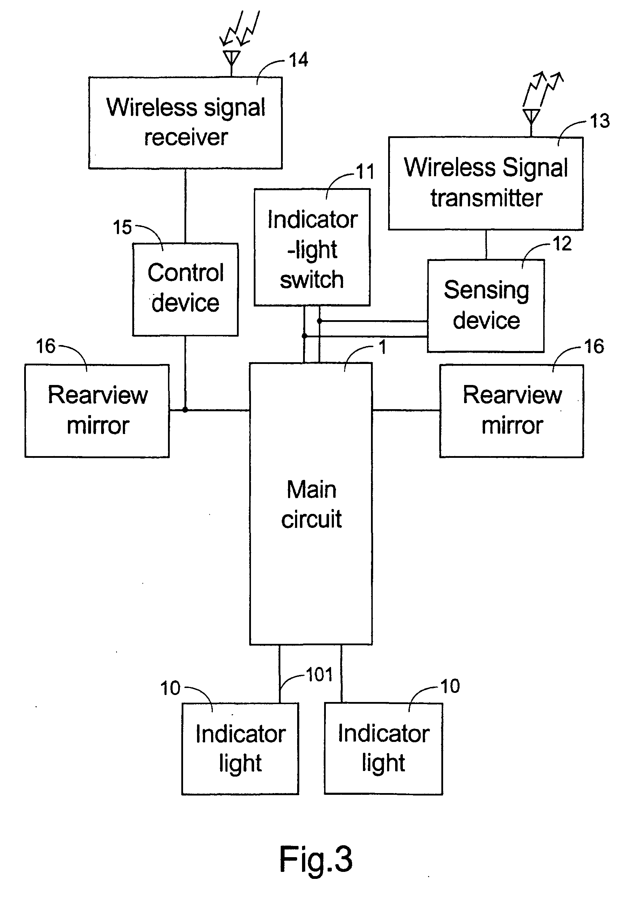

Please refer to Fig. 3 which is a schematic circuit block diagram showing a simplified layout of a vehicle associated with automatic view-range adjustment according to another preferred embodiment of the present invention. In this embodiment, the main circuit 1 is a vehicular digital bus such as a controller area network (CAN) bus or a vehicle area network (VAN) bus. The sensing device 12 is connected to the vehicular digital bus 1.

When the driver intends to turn the vehicle right, for example, he should manipulate the indicator light switch 11, and a digital encoded signal is outputted to the vehicular digital bus 1. The sensing device 12, while detecting the digital encoded signal from the vehicular digital bus 1, asserts a control signal indicative of the right turn information to the wireless signal transmitter 13. The wireless signal transmitter 13 then transforms and outputs the control signal in a wireless transmission format. The wireless transmitted control signal is received by the wireless signal receiver 14, and demodulated into the control signal to be read by the control device 15. In response to the control signal, the control device 15 turns the rearview mirror 16 at the right side outwards, i.e. counterclockwise, to enlarge the view range at the right side. Alternatively, both of the rearview mirrors 16 can be turned counterclockwise to have even larger view range at the right side.

Since the sensing device 12 can detect the enabled operation of the indicator-light switch 11 via the vehicular digital bus 1, the sensing device 12 can be mounted at any position advantageous to mounting work. Of course, the relative positions of the wireless signal transmitter 13 and the wireless signal receiver 14 should be suitable for the wireless transmission.

In the above embodiments, the indicator lights and the indicator light switch are exemplified as vehicular status indicators for determining whether the view range of the rearview mirror is to be adjusted. Other vehicular status indicators can also be used to realize the current or coming action of the vehicle so that the view range of the rearview mirror can be adjusted simultaneously or in advance if necessary. The vehicular status indicators, for example, include an indicator-light switch, an electronic compass, a global positioning system (GPS), a telematics system, an attitude indicator, a vehicle stability control system, and a yaw sensor. Some of the output signals indicate the turning operation of the vehicle, some indicate the slope change of the vehicle, and others indicate the speed change of the vehicle. For example, in the case that the vehicle is climbing up a slope, the rearview mirror is preferably turned downwards in response to the control signal. For the case that the vehicle is suddenly accelerated, the two rearview mirrors are both rotated outwards for facilitating the overtaking operation.

In addition to the rearview mirrors, the driver can also monitor the exterior situation via other vehicular monitoring devices, e.g. CCD (charge coupled device) or CMOS (complementary metal oxide semiconductor) cameras, backup radars and displays such as liquid crystal displays. The rearview mirrors, cameras and backup radars can be rotated in response to the control signal to change the view range. On the other hand, the displays can change the view range by a zoom in/out operation.

Preferably, the view-range adjusting operation of the vehicular monitoring device is performed at a rate correlating to a driving speed of the vehicle. In other words, the faster the vehicle is driven, the faster the motor speed for rotating rearview mirrors, cameras and/or backup radars, and the zooming speed of the displays.

The features disclosed in the foregoing description, in the claims and/or in the accompanying drawings may, both separately and in any combination thereof, be material for realising the invention in diverse forms thereof.

## Claims

1. A wireless transmission control assembly for used with a vehicular monitoring device and a vehicular status indicator, comprising:
a sensing device in communication with the vehicular status indicator, asserting a control signal in response to an enabled operation of the vehicular status indicator;
a wireless signal transmitter in communication with the sensing device, transforming the control signal into a wireless transmission control signal, and outputting the wireless transmission control signal;
a wireless signal receiver receiving and recovering the wireless transmission control signal into the control signal; and
a control device in communication with the wireless signal receiver and the vehicular monitoring device, having the vehicular monitoring device perform a view-range adjusting operation in response to the control signal.

2. The wireless transmission control assembly according to claim 1, **characterized in that** the sensing device and the wireless signal transmitter are disposed adjacent to the vehicular status indicator.

3. The wireless transmission control assembly according to claim 2, **characterized in that** the vehicular status indicator is a turning-direction indicator light, and the sensing device and the wireless signal transmitter are disposed in the trunk of a vehicle.

4. The wireless transmission control assembly according to claim 2, **characterized in that** the vehicular status indicator is a member selected from a group consisting of an indicator-light switch, an electronic compass, a global positioning system (GPS), a telematics system, an attitude indicator, a vehicle stability control system, and a yaw sensor.

5. The wireless transmission control assembly according to claim 1, **characterized in that** the wireless signal receiver and the control device are disposed adjacent to the vehicular monitoring device.

6. The wireless transmission control assembly according to claim 1, **characterized in that** the vehicular monitoring device includes a rearview mirror, a camera, and/or a display.

7. The wireless transmission control assembly according to claim 1, **characterized in that** the view-range adjusting operation of the vehicular monitoring device is a rotating operation.

8. The wireless transmission control assembly according to claim 7, **characterized in that** the vehicular monitoring device is rotated from an initial position toward a working position in response to the assertion of the control signal, and rotated back to the initial position in response to the suspension of the control signal.

9. The wireless transmission control assembly according to claim 1, **characterized in that** the view-range adjusting operation of the vehicular monitoring device is disabled when two different control signals are received by the control device at the same time.

10. The wireless transmission control assembly according to claim 1, **characterized in that** the view-range adjusting operation of the vehicular monitoring device is a zooming operation.

11. The wireless transmission control assembly according to claim 1, **characterized in that** the wireless signal transmitter is in communication with the sensing device via a vehicular digital bus, and the control device is in communication with the wireless signal receiver via the vehicular digital bus.

12. The wireless transmission control assembly according to claim 11, **characterized in that** the vehicular digital bus is a controller area network (CAN) bus or a vehicle area network (VAN) bus.

13. The wireless transmission control assembly according to claim 1, **characterized in that** the view-range adjusting operation of the vehicular monitoring device is performed at a rate correlating to a driving speed of the vehicle.
